Europäisches Patentamt

European Patent Office

Office européen des brevets

(11) Veröffentlichungsnummer: **0 472 978 A2**

# (12) EUROPÄISCHE PATENTANMELDUNG

(21) Anmeldenummer: **91113340.3**

(22) Anmeldetag: **08.08.91**

(51) Int. Cl.5: **C08J 7/04**, C08L 23/10

(30) Priorität: **10.08.90 DE 4025361**

(43) Veröffentlichungstag der Anmeldung:
**04.03.92 Patentblatt 92/10**

(84) Benannte Vertragsstaaten:
**AT BE CH DE DK ES FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Gübitz, Franz**
**Am Reitplatz 1**
**W-6233 Kelkheim/Ts.(DE)**
Erfinder: **Ritter, Volker**
-
**Verstorben(DE)**

(54) **Kunststoff-Formkörper mit lackierter Oberfläche und Verfahren zu seiner Herstellung.**

(57) Kunststoff-Formkörper, bestehend vorzugsweise aus einer Polypropylen-Formmasse aus 95 bis 50 Gew.-Teilen isotaktischem Polypropylen oder Mischpolymerisaten des Propylens mit bis zu 10 Gew.-% Ethylen, 5 bis 50 Gew.-Teilen kautschukartiger, mit Polypropylen verträglicher Mischpolymerisate und 0 bis 50 Gew.-Teilen verstärkender Füllstoffe in der Unterschicht, passend eingefärbt und mit einer einlagigen Lackschicht versehen, eignen sich hervorragend für Außenanwendungen am Automobil.

EP 0 472 978 A2

Für die Produktion von Kraftfahrzeugen werden in zunehmendem Maße Kunststoffe eingesetzt. Schlagzäh modifiziertes PP erweist sich dabei als besonders geeignet für Anwendungen wie Stoßfänger, Spoiler, Kotflügel, Seitenschutzleisten und dergleichen. Bisher wurden diese Teile überwiegend aus grau oder schwarz eingefärbtem und UV-stabilisiertem Material hergestellt. Seitens der Automobilindustrie besteht nun immer häufiger der Wunsch, derartige Formteile in der Farbe des Wagens oder in einem passenden Kontrastfarbton zu lackieren. Dies wird gegenwärtig dadurch erreicht, daß die meist grau oder schwarz eingefärbten Formteile mit einem farbigen Lack lackiert werden; üblich ist dabei eine Lackierung aus 2 bis 4 Schichten. Derartige Lackierungen sind sehr aufwendig und teuer. Die aufgebrachten Lackschichten übernehmen dabei u.a. die Funktion der Farbgebung und des UV-Schutzes des Formteiles.

Es wurde nun gefunden, daß dieses Problem gelöst werden kann, wenn man ein Polypropylen verwendet, welches ein kautschukartiges Mischpolymerisat und einen verstärkenden Füllstoff enthält und wenn man die Formteile farbig herstellt und danach mit einem Klarlack überzieht.

Gegenstand der Erfindung ist somit der in den Ansprüchen genannte Formkörper mit lackierter Oberfläche und das Verfahren zu seiner Herstellung.

Dieser Formkörper erfüllt ausgezeichnet die Qualitätsanforderungen sowohl der Verarbeitungsindustrie als auch der Automobilindustrie.

Der Formkörper besteht in seiner Kunststoff-Unterschicht aus

a) 95 bis 50, vorzugsweise 90 bis 70 Gew.-Teilen isotaktischem Polypropylen oder Mischpolymerisaten des Propylens mit bis zu 10 Gew.-% Ethylen,

b) 15 bis 50, vorzugsweise 10 bis 30 Gew.-Teilen kautschukartiger, mit Polypropylen verträglicher Mischpolymerisate und

c) 10 bis 50, vorzugsweise 10 bis 40 Gew.-Teilen verstärkender Füllstoffe.

Vorzugsweise wird ein Homo- oder Copolymer des Propylens mit einem Schmelzindex MFI 230/5 nach DIN 53 735 von 5 bis 65 g/10 min verwendet.

Als kautschukartige Mischpolymerisate eignen sich vor allem amorphe Mischpolymerisate aus 30 - 70 Gew.-% Ethylen und 70 - 30 Gew.-% Propylen, Terpolymerisate aus Ethylen, Propylen und bis zu 5 Gew.-% Dienen, vorzugsweise Ethylidennorbornen oder 1,4-Hexadien, Mischpolymerisate aus Ethylen und 10 bis 45 Gew.-% Vinylacetat oder Blockcopolymere aus Styrol und Butadien oder Styrol und Isopren, die an beiden Molekülenden Polystyrolblöcke besitzen.

Als verstärkende Füllstoffe werden vorzugsweise Talkum, Kreide, Glimmer, Glasfasern oder Glaskugeln eingesetzt.

Für die Verwendung im Automobilbau, insbesondere als Stoßfänger, Spoiler und dergleichen außen am Auto, enthält der erfindungsgemäße Formkörper in der Unterschicht Farbpigmente. Außerdem sind in der Unterschicht die üblichen Additive, wie beispielsweise Stabilisatoren, enthalten. Die Oberfläche des Formkörpers kann glatt oder genarbt sein.

Sie ist lackiert mit einem Polyurethanlack, vorzugsweise einem Zweikomponentensystem aus einem NCO-Prepolymer und einer Polyhydroxiverbindung. Das NCO-Prepolymer leitet sich vorwiegend vom Diisocyanatodiphenylmethan ( = MDI) ab, die Polyhydroxiverbindung ist vorzugsweise ein Polyesterpolyol, ein Polyetherpolyol, ein Epoxidharz, ein Polychloroprenharz oder ein Siliconharz. Außerdem enthält der Lack einen Haftvermittler, beispielsweise chlorierte Polyolefine mit Chlorgehalten von 15 bis 50 Gew.-%, gegebenenfalls in Mischung mit Ethylen-Vinylacetat-Copolymerisaten, mit Carbonsäuren oder Carbonsäureanhydriden modifizierte amorphe Propylentypen, sulfoniertes oder sulfochloriertes amorphes Polypropylen oder Mischungen von amorphem Polypropylen mit Styrolpolymeren, Polyamiden oder Polyalkyleniminen. Dieser Lack haftet auf der erfindungsgemäß zu verwendenden Formkörper-Unterschicht ohne physikalische oder chemische Vorbehandlung.

Falls spezielle optische Effekte, beispielsweise Perlmutteffekte, erreicht werden sollen, kann dem Lack ein Metallpigment oder ein Perlpigment (z.B. eingefärbter Glimmer) zugefügt werden. Die Zugabemenge beträgt im allgemeinen 0,01 bis 1,0 Gew.-%.

Der erfindungsgemäße Kunststoff-Formkörper enthält vorzugsweise eine einlagige Lackschicht, welche fest auf der Oberfläche haftet.

Das erfindungsgemäße Verfahren hat gegenüber der bekannten Arbeitsweise den Vorteil, daß in der Regel nur eine einzige Lackschicht aufgetragen wird, die sowohl UV-Schutz als gegebenenfalls auch optische Effekte beinhaltet, wodurch der Aufwand zur Herstellung lackierter Kunststoff-Formteile wirksam reduziert wird.

Aus der Kombination eines farbigen Grundkörpers mit einer klaren oder nur sehr gering modifizierten Lackschicht ergeben sich neuartige und auf traditionellem Wege bisher praktisch nicht realisierbare optische Gestaltungsmöglichkeiten.

**Beispiel 1**

55 Gew.-% stabilisiertes, isotaktisches Polypropylen (MFI 230/5 = 18 g/10 min), 25 Gew.-% amorphes EthylenPropylen-Copolymer (55 Gew.-% C$_2$, 45 Gew.-% C$_3$) und 20 Gew.-% Talkum wurden gemischt und in einem blauen Farbton eingefärbt. Aus dieser Mischung wurde im Spritzgußverfahren ein Stoßfänger hergestellt, der mit einem 62 Gew.-% Bindemittel, 8 Gew.-% Haftvermittler (chloriertes amorphes Polypropylen und 0,1 Gew.-% Metallpigment enthaltenden Zweikomponenten-Polyurethan-Klarlack lackiert und 20 min bei 100° C getrocknet wurde.

An dem lackierten Stoßfänger wurden folgende Meßwerte ermittelt:
Gitterschnitt nach DIN 53151: Gt 0 - 1
Schwitzwassertest (Konstantklima)
nach DIN 50017 bzw. 53209 und
Gitterschnitt: Gt 0 - 1
Dampfstrahlprüfung nach
Mercedes Benz Prüfnorm DBL 5416: Bestanden

## Beispiel 2

50 Gew.-% stabilisiertes isotaktisches Polypropylen (MFI 230/5 = 65 g/10 min), 30 Gew.-% amorphes Ethylen-Propylen-Copolymer (55 Gew.-% $C_2$, 45 Gew.-% $C_3$) und 20 % Kreide wurden beige eingefärbt und zusätzlich mit 0,5 Gew.-% eines handelsüblichen UV-Absorbers ausgerüstet.

Aus dieser Mischung wurde im Spritzgußverfahren ein Kühlergitter hergestellt, das anschließend mit einem wie im Beispiel 1 beschriebenen Lack lackiert wurde. Anstelle des Metallpigments war diesem Lack 0,05 Gew.-% eines Perlpigmentes zugemischt worden. Die Prüfung und Beurteilung erfolgte analog Beispiel 1 und ergab die gleichen Werte.

## Beispiel 3

65 Gew.-% stabilisiertes isotaktisches Polypropylen (MFI 230/2 = 0,2 - 0,3 g/10 min) und 35 Gew.-% amorphes Ethylen-Propylen-Copolymer wurden in einem roten Farbton eingefärbt und zusätzlich mit 0,5 Gew.-% UV-Absorber ausgerüstet.

Aus dieser Mischung wurde im Extrusionsblasverfahren ein Heckspoiler hergestellt und mit einem Lack wie im Beispiel 1 beschrieben (jedoch ohne Metallpigment oder Perlpigment-Zusatz) lackiert. Man erzielte die gleichen Ergebnisse wie in Beispiel 1.

## Patentansprüche

1. Kunststoff-Formkörper mit lackierter Oberfläche bestehend aus einer eingefärbten Kunststoff-Unterschicht und einer Lackschicht, dadurch gekennzeichnet, daß die Kunststoff-Unterschicht aus einer Mischung von
   a) 95 bis 50 Gew.-Teilen isotaktischem Polypropylen oder Mischpolymerisaten des Propylens mit bis zu 10 Gew.-% Ethylen,
   b) 5 bis 50 Gew.-Teilen kautschukartiger, mit Polypropylen verträglicher Mischpolymerisate und
   c) 0 bis 50 Gew.-Teilen verstärkender Füllstoffe besteht und daß die Lackschicht aus einem in einem. Arbeitsschritt aufgebrachten Klarlack besteht.

2. Formkörper nach Anspruch 1, dadurch gekennzeichnet, daß der Klarlack einen Haftvermittler enthält.

3. Formkörper nach Anspruch 1, dadurch gekennzeichnet, daß der Klarlack ein Metall- oder Perlpigment in einer Menge von 0,01 bis 1,0 Gew.-% enthält.

4. Formkörper nach Anspruch 1, dadurch gekennzeichnet, daß das kautschukartige Mischpolymerisat ein amorphes Mischpolymerisat aus 30 - 70 Gew.-% Ethylen und 70 - 30 Gew.-% Propylen oder ein Terpolymerisat aus Ethylen, Propylen und bis zu 5 Gew.-% Dienen ist.

5. Formkörper nach Anspruch 1, dadurch gekennzeichnet, daß die verstärkenden Füllstoffe Talkum, Kreide, Glimmer, Glasfasern oder Glaskugeln sind.

6. Verfahren zum Herstellen von Kunststoff-Formkörpern mit lackierter Oberfläche durch Beschichten der Oberfläche der Formkörper mit einem Lack, dadurch gekennzeichnet, daß man einen eingefärbten Formkörper aus
   a) 95 bis 50 Gew.-Teilen isotaktischem Polypropylen oder Mischpolymerisaten des Propylens mit bis zu 10 Gew.-% Ethylen,
   b) 5 bis 50 Gew.-Teilen kautschukartiger, mit Polypropylen verträglicher Mischpolymerisate und
   c) 0 bis 50 Gew.-Teilen verstärkender Füllstoffe einsetzt.

7. Verfahren nach Anspruch 6, dadurch gekennzeichnet, daß man Formkörper einsetzt, die als kautschukartige Mischpolymerisate amorphe Mischpolymerisate aus 30 - 70 Gew.-% Ethylen und 70 - 30 Gew.-% Propylen oder Terpolymerisate aus Ethylen, Propylen und bis zu 5 Gew.-% Dienen enthalten.

8. Verfahren nach Anspruch 6, dadurch gekennzeichnet, daß man Formkörper einsetzt, die als verstärkende Füllstoffe Talkum, Kreide,Glimmer, Glasfasern oder Glaskugeln enthalten.